# EUROPÄISCHE PATENTSCHRIFT

(11) **EP 1 786 666 B1**
(45) Veröffentlichungstag und Bekanntmachung des Hinweises auf die Patenterteilung: **17.03.2010**
(21) Anmeldenummer: 05789021.2
(22) Anmeldetag: 05.09.2005
(51) Int. Cl.: B63H 9/06, B63J 3/02

(54) **WASSERFAHRZEUG MIT EINEM DRACHENARTIGEN ELEMENT**
WATER CRAFT COMPRISING A KITE-TYPE ELEMENT
EMBARCATION A ELEMENT DE TYPE CERF-VOLANT

(30) Priorität: 06.09.2004 DE 202004013840 U
(43) Veröffentlichungstag der Anmeldung: 23.05.2007
(73) Patentinhaber: Skysails GmbH & Co. KG, 21079 Hamburg (DE)
(72) Erfinder: WRAGE, Stephan, 22767 Hamburg (DE)
(74) Vertreter: Niebuhr, Heinrich
(86) Internationale Anmeldenummer: PCT/EP2005/009531
(87) Internationale Veröffentlichungsnummer: WO 2006/027195

(56) Entgegenhaltungen:
- GB-A- 2 098 952
- US-A- 5 642 683

## Beschreibung

Die Erfindung betrifft ein Wasserfahrzeug mit einem drachenartigen Element, das mit einem Zugseil mit dem Wasserfahrzeug verbunden ist.

Bei einem vorbekannten Wasserfahrzeug (WO 01/192102 A1) kann vorgesehen sein, dass das drachenartige Element mit mehreren Zugseilen mit dem Wasserfahrzeug verbunden ist. Das drachenartige Element dient dabei dem Schiffsantrieb durch Wind, wobei dieser Antrieb ausschließlich durch Wind erfolgen kann oder aber der Antrieb durch Wind nur zur Unterstützung des maschinellen Antriebs dient, um so Treibstoff zu sparen oder die Geschwindigkeit zu erhöhen. Aufgrund der mehreren Zugseile kann das drachenartige Element gesteuert werden. Mehrere Zugseile haben aber den Nachteil, dass sie einzeln aufgewunden bzw. abgewickelt werden müssen, um das drachenartige Element einzuholen oder zu setzen. Auch könnten sich die mehreren Zugseile verheddern. Es ist daher aus der genannten Schrift auch ein Wasserfahrzeug mit einem drachenartigen Element der eingangs genannte Art bekannt, bei dem nur ein Zugseil vorgesehen ist, durch das die genannten Probleme vermieden werden.

Der Nachteil besteht aber darin, dass das drachenförmige Element nicht mehr ohne weiteres gesteuert werden kann.

Die Aufgabe der Erfindung besteht in der Schaffung eines Wasserfahrzeugs mit einem drachenartigen Element der eingangs genannten Art, bei dem das drachenartige Element gezielt gesteuert werden kann.

Das Dokument GB 2098952, das als nächstliegender Stand der Technik angesehen wird, offenbart ein Drachensegelsystem dessen Steuerung von einer erschöpfbaren Energiequelle angetrieben wird.

Die erfindungsgemäße Lösung besteht darin, dass das drachenartige Element mit Verstelleinrichtungen und einer Energieerzeugungseinrichtung versehen ist, die bei Veränderung der auf das Zugseil ausgeübten Zugkraft Energie abgibt.

Es sind also Verstelleinrichtungen vorgesehen, mit denen die Form der Segel des drachenartigen Elements, der Anstellwinkel, Öffnungsklappen, Reffvorgänge und dergleichen geändert oder bewirkt werden können. Die Steuerung kann dabei selbsttätig durch am drachenartigen Element vorgesehene Sensoren oder, was besonders vorteilhaft ist, per Funk vom Schiff her durchgeführt werden. Es bereitet dabei keine Probleme, die Signale zum drachenartigen Element zu senden. Es ist aber eine Energieversorgung für die Verstelleinrichtungen notwendig.

Die entsprechende Energie wird erfindungsgemäß durch eine Energieerzeugungseinrichtung erhalten, die bei Veränderung der auf das Zugseil ausgeübten Zugkraft Energie abgibt. Bei konstanter Zugkraft könnte so keine Energie gewonnen werden. Man müsste sich schon das drachenartige Element immer weiter vom Schiff entfernen lassen, um aus dem Produkt von Zugkraft und zurückgelegter Verlängerung des Zugseils Energie zu gewinnen. Eine solche Lösung ist natürlich nicht praktikabel. Erfindungsgemäß wurde nun herausgefunden, dass die Energie bei Veränderung der auf das Zugseil ausgeübten Zugkraft gewonnen werden kann. Wenn hier von "Energie gewinnen" oder "Energie erzeugen" die Rede ist, so wird natürlich keine Energie aus dem Nichts geschaffen, es findet vielmehr nur eine Energieumwandlung statt. Erfindungsgemäß wurde herausgefunden, dass die Zugkraft wegen wechselnder Windgeschwindigkeiten, Schiffsbewegungen aufgrund des Wellenganges oder aber wegen gezielt durchgeführter Bahnbewegungen des drachenartigen Elements so stark variiert, dass daraus Energie für die Steuerung des drachenartigen Elements gewonnen werden kann.

Die Energieerzeugungseinrichtung ist zwischen der Steuergondel des drachenartigen Elements und dem Zugseil angeordnet. Bei geringer Last auf dem Zugseil befindet sich die Energieerzeugungseinrichtung relativ im entspannten Zustand. Wird die Last größer, steht die Energieerzeugungseinrichtung unter größerer Zugspannung. Diese Zugspannung kann zur Energieerzeugung verwendet werden.

Messungen haben ergeben, dass bis zu 200% der benötigten Lenkenergie aus der Zugkraftänderung gewonnen werden können.

Bei einer vorteilhaften Ausführungsform weist die Energieerzeugungseinrichtung eine Kolbenzylindereinheit mit einem federbelasteten Kolben auf, wobei der Zylinder mit dem Zugseil und der Kolben mit dem drachenartigen Element oder der Zylinder mit dem drachenartigen Element und der Kolben mit dem Zugseil verbunden ist und der Zylinder über einen Rückschlagventil mit einem Druckfluidspeicher verbunden ist. Erhöht sich die Zugkraft, so wird der Kolben gegen die Federkraft bewegt und komprimiert das im Zylinder befindliche Fluid, das dann über ein Rückschlagventil in einen Druckfluidspeicher geleitet werden kann. Verringert sich die Zugkraft, so wird der Kolben in umgekehrter Richtung bewegt und saugt erneut Fluid von außen an, was ebenfalls durch ein Rückschlagventil gesteuert werden kann. Bei erneutem Anwachsen der Zugkraft wird wieder Fluid in den Druckfluidspeicher gedrückt.

Bei einer vorteilhaften Ausführungsform ist der Kolben in der Mitte einer Kolbenzylindereinheit angeordnet. Auf beiden Seiten des Kolbens befinden sich dann Zylindervolumina, die über je ein Rückschlagventil mit dem Druckfluidspeicher verbunden sind. Steigt die Zugkraft an, so wird über das eine Zylindervolumen Druckfluid in den Druckfluidspeicher geleitet, während in das andere Zylindervolumen Druckfluid eingesaugt wird. Lässt die Zugkraft nach und wird der Kolben durch die Feder oder Federn in umgekehrter Richtung bewegt, so wird das Druckfluid im anderen Zylindervolumen komprimiert und in den Druckfluidspeicher geleitet, während in das erste Zylindervolumen Druckfluid angesogen wird.

Der Kolben arbeitet dabei gegen den Druck des Druckfluidspeichers. Ist der Druck im Druckfluidspeicher hoch, ist also viel Energie gespeichert, so wird von der Energieerzeugungseinrichtung nur bei sehr hohen Zugkräften noch Fluid nachgeliefert. Ist wenig Energie vorhanden, ist der Druck im Druckfluidspeicher also gering, so kann der Kolben auch schon bei geringeren Zugkräften neues Druckfluid zuführen. Es versteht sich dabei, dass die Anordnung mit Sicherheitsventilen versehen sein muss, um zu hohen Überdruck bei sehr hoher Zugkraft zu vermeiden.

Statt einer Kolbenzylindereinheit kann vorgesehen sein, dass die Energieerzeugungseinrichtung ein sackartiges Gebilde mit einer luftdichten Hülle ist, das an einem Ende mit dem Zugseil und am anderen Ende mit dem drachenartigen Element verbunden ist, durch elastische Spreizelemente aufgeweitet wird, bei Auftreten einer Zugkraft unter Volumenverringerung auseinandergezogen wird und über ein Rückschlagventil mit einem Druckluftspeicher verbunden ist. Ist nur wenig Zugkraft vorhanden, wird das sackartige Gebilde durch die elastischen Spreizelemente aufgespreizt und nimmt so großes Volumen ein. Erhöht sich dann die Zugkraft, so wird das Volumen des sackartigen Gebildes verringert, der Druck darin erhöht und dadurch, wenn die Druckerhöhung groß genug ist, Luft in den Druckfluidspeicher befördert. Es versteht sich von selbst, dass bei dieser Ausführungsform Luft das geeignete Druckfluid ist. Bei der vorgenannten Energieerzeugungseinrichtung mit einer Kolbenzylindereinheit könnte auch ein Hydraulikfluid verwendet werden, obwohl auch hier aus Gewichtsgründen und wegen möglicherweise auftretender Lecks Luft als Druckfluid vorzuziehen ist.

Das sackartige Gebilde kann z. B. vom Zugseil netzartig umwoben sein. Wird die Last größer, spannt sich das Zugseil, und die netzartig die elastische Hülle umgebenden zugbelasteten Fasern streben aufeinander zu (mit dem Bestreben, parallel zueinander zu liegen) und drücken so die elastische gespreizte mit Luft gefüllte Hülle zusammen. Dadurch wird die in der Hülle befindliche Luft, die über ein Rückschlagventil eingeströmt ist, komprimiert und kann ähnlich wie bei der Kolbenzylindereinheit in den Druckfluidspeicher geleitet werden.

Das Druckfluid kann direkt zur Steuerung verwendet werden. Es ist aber auch möglich, den Druckfluidspeicher mit einem Generator zum Erzeugen von elektrischer Energie zu verbinden, wobei dann die Steuerung durch elektrische Energie und nicht durch das Druckfluid erfolgt. Auch wenn die eigentliche Steuerung durch das Druckfluid erfolgt, kann ein kleiner Generator zum Erzeugen von elektrischer Energie verwendet werden, mit dem Ventile betätigt werden, Sensoren mit Strom versorgt werden usw.

Direkt elektrische Energie kann man erzeugen, wenn vorgesehen ist, dass die Energieerzeugungseinrichtung einen Lineargenerator mit einem federbelasteten Läufer aufweist, wobei der Ständer mit dem Zugseil und der Läufer mit dem drachenartigen Element oder der Ständer mit dem drachenartigen Element und der Läufer mit dem Zugseil verbunden ist. Erhöht sich die Zugkraft, so wird der Läufer gegen die Federkraft bewegt und erzeugt Strom. Lässt die Zugkraft nach, so bewegt die Feder den Läufer zurück, wodurch ebenfalls Strom erzeugt wird.

Bei einer anderen, ähnlich aufgebauten vorteilhaften Ausführungsform ist vorgesehen, dass die Energieerzeugungseinrichtung eine in einem Bauelement verschiebbar angeordnete federbelastete Zahnstange aufweist, die über ein am Bauelement gelagertes Ritzel einen Generator antreibt, und das Bauelement mit dem Zugseil und die Zahnstange mit dem drachenartigen Element oder das Bauelement mit dem drachenartigen Element und die Zahnstange mit dem Zugseil verbunden ist. Die Wirkungsweise ist ähnlich wie bei dem erwähnten Lineargenerator, so dass darauf nicht näher eingegangen werden muss.

Bei einer weiteren vorteilhaften Ausführungsform ist die Energieerzeugungseinrichtung ein Piezo-Element. Das Piezo-Element ist auf einer Seite mit dem Zugseil und auf der anderen Seite mit dem drachenartigen Element verbunden. Ändert sich die auf das Piezo-Element wirkende mechanische Spannung, wird elektrische Energie erzeugt.

Bei einer vorteilhaften Ausführungsform kann vorgesehen werden, dass mehrere parallel oder hintereinander angeordnete Energieerzeugungseinrichtungen vorgesehen sind. Parallel angeordnete Einrichtungen ergeben größere Druckluft, Druckfluid oder Energiemengen, ohne dass die einzelne Energieerzeugungseinrichtung große Ausmaße annehmen muss. Sind die Energieerzeugungseinrichtungen hintereinander angeordnet, so verteilt sich die Zugkraft auf die einzelnen Energieerzeugungseinrichtungen. Bei geringen Windstärken, d. h. geringer Zugkraft könnte eine der Energieerzeugungseinrichtungen blockiert werden, so dass die gesamte Zugkraft auf eine Energieerzeugungseinrichtung wirkt, um so den ausreichend hohen Druck für die Steuerung zu erhalten. Nimmt die Zugkraft dagegen zu, so werden beide (oder noch mehr) Energieerzeugungseinrichtungen hintereinander verwendet, so dass sich die Zugkraft auf die einzelnen Energieerzeugungseinrichtungen verteilt, wodurch weniger hohe Kräfte und Drücke auftreten.

Statt einem Federelement können mehrere Federelemente vorgesehen sein. Zwei Federelemente wird man z. B. vorsehen, wenn der Kolben, der Linearmotor oder die Zahnstange sich in einer Mittelstellung befinden soll, wenn mittlere Zugkräfte auftreten. Je größer die Zugkraft ist, umso mehr wird das Federelement zusammengedrückt oder auseinandergezogen, so dass ein Federelement sowohl bei geringen Zugkräften als auch bei großen Zugkräften wirken kann. Zusätzlich kann aber vorgesehen sein, dass die Federkraft einstellbar ist, um so eine Optimierung für unterschiedliche Zugkräfte und Windstärken zu erhalten.

Es könnte eine mechanische, insbesondere eine metallische Feder verwendet werden, bei der die Federkonstante kontinuierlich einstellbar ist. Bei einer vorteilhaften Ausführungsform ist die Feder aber eine Pressluftfeder. Über den Druck im Federkolben kann die Federkennlinie den jeweils herrschenden Windbedingungen angepasst werden. Der Arbeitspunkt des drachenartigen Elements kann je nach Windgeschwindigkeit erheblich variieren. Um zu erreichen, dass mit derselben Anordnung bei verschiedenen Windgeschwindigkeiten Energie erzeugt werden kann, ist eine einstellbare Feder von Vorteil.

Ein Rücktrieb des Kolbens oder die Spreizung des Luftsacks kann auch dadurch erfolgen, dass statt Verwendung der Federkraft oder zusätzlich zur Verwendung der Federkraft ein Teil des im Druckfluidspeicher befindlichen Druckfluids zum Rücktrieb genutzt wird. Damit mit dieser Anordnung Energie erzeugt werden kann, muss der Rücktrieb natürlich zu einem Zeitpunkt verhältnismäßig schwacher Zugkraft erfolgen.

Als Druckfluid wird vorteilhafterweise eine Hydraulikflüssigkeit, insbesondere ein Hydrauliköl verwendet. Vorteil sind kleine Bauweise und geringe Gewichte bei großen Stellkräften (durch hohe Drücke, schnelle Umsteuerbarkeit und aufgrund der Inkompressibilität der Hydraulikflüssigkeit kein Energieverbrauch, wenn ein erreichter Steuerzustand gehalten werden soll). Wenn die Ventile geschlossen werden, wird dieser Steuerzustand besonders vorteilhaft gehalten. Weitere Vorteile sind gute und verbreitete Industriestandards sowie weltweite Verfügbarkeit der Einzelteile.

Wenn als Fluid eine Hydraulikflüssigkeit verwendet wird, ist es vorteilhaft, die Hydraulikenergie direkt zu speichern. Dazu kann ein in der Industrie üblicher Speicher verwendet werden, der neben der Hydraulikflüssigkeit auch ein kompressibles Gas enthält. Die Energieerzeugungseinrichtung kann unter Druckerhöhung Energie in diesem Speicher ablegen. Bei Entnahme von Hydraulikflüssigkeit mindert sich der Druck, und es kann die entsprechende Energie genutzt werden. Da es sich bei dem drachenartigen Element um ein dynamisches System handelt, das im zeitlichen Verlauf schnelle Änderungen der Richtung der Schwerkraft und der Richtung und der Größe der Fliehkraft erfährt, ist es vorteilhaft, wenn die Entnahme der Hydraulikflüssigkeit durch einen flexiblen Schlauch erfolgt, dessen Ende mit einem Gewicht beschwert ist. Da Hydraulikflüssigkeit schwerer ist als das kompressible Gas, wird sich das Ende des beschwerten Schlauchs immer im Hydraulikflüssigkeitsvorrat befinden. Somit soll gewährleistet werden, dass in jedem Manöver- oder Flugzustand Hydraulikflüssigkeit entnommen werden kann. Bei einer alternativen Ausführungsform kann das kompressible Gas durch eine Membran von der Hydraulikflüssigkeit getrennt sein. Befindet sich der Schlauch zur Entnahme der Hydraulikflüssigkeit im Flüssigkeitsabteil des Speichers, kann so auch gewährleistet werden, dass in jedem Manöver- und Flugzustand Hydraulikflüssigkeit entnommen werden kann und zur Steuerung zur Verfügung steht.

Ist der Zug konstant, so kann keine Energie gewonnen werden. Ein solcher Zustand wird aber nur selten auftreten. Möglicherweise reichen die Schwankungen der Zugkraft bei sehr gleichmäßigem Wind und wenig Wellengang aber nicht aus, um ausreichend Energie für die Steuerung des drachenartigen Elements zu gewinnen. In diesem Falle kann vorgesehen sein, dass am Wasserfahrzeug eine Winsch vorgesehen ist, mit der die Zugkraft des Zugseils durch Dichtholen oder Fieren desselben veränderbar ist. Es wird also mit Hilfe der Winsch Energie aufgebracht, die dann über das Zugseil auf die Energieerzeugungseinrichtung übertragen wird.

Bei einer vorteilhaften Ausführungsform wird zur Übertragung von wechselnder Zugkraft und damit Schwingungsenergie vom Schiff zur Gondel nicht die Winsch genutzt, was den Nachteil hoher Massenträgigkeit und hoher notwendiger Haltekräfte beinhaltet, sondern ein separater Hydraulikstempel, der auf das Zugseil wirkt und durch Pulse Energie übeträgt. Bei einer anderen Ausführungsform oder zusätzlich kann vorgesehen sein, dass die Winsch auf einem Schlitten angeordnet ist, auf dem sie hin- und hergefahren werden kann, was auch mit Hilfe eines Hydraulikstempels geschehen kann. Auf diese Weise kann nicht nur Energie übertragen werden, sondern auch der Angriffspunkt des Zugseils am Schiff verschoben werden.

Wenn mit der erfindungsgemäßen Energieerzeugungseinrichtung elektrischer Strom erzeugt wird, wird zweckmäßigerweise vorgesehen, dass der Strom in einem Akku gespeichert werden kann, der am drachenartigen Element angeordnet ist. Die Speicherung der am drachenartigen Element erzeugten Energie ist wesentlich, weil hier Perioden mit schwacher Energieausbeute überbrückt werden können, z. B. beim Bergen des drachenartigen Elements. Auch wichtig ist der Speicher für den Fall, dass die Energieerzeugungseinheit ausfällt und der Drachen sicher geborgen werden soll. Hier kann ein Speicher die nötige Lenkenergie zur Verfügung stellen.

Alternativ zu den vorgenannten Möglichkeiten der Energieerzeugung und -speicherung oder zusätzlich dazu kann vorgesehen sein, dass die Energieerzeugungseinrichtung eine Feder aufweist, die zum Speichern der Energie ausgebildet ist. Ein solcher Energiespeicher in Form einer Feder hat den Vorteil, dass sie praktisch sofort ihre Kraft oder ihr Drehmoment freisetzen kann. Die Kraft oder das Drehmoment wird auch so lange geliefert, bis die gespeicherte Energie verbraucht ist. Die Energiespeicherung in Form einer Feder hat auch den Vorteil, dass sie verhältnismäßig geringes Gewicht aufweist. Hier kann der Nachteil einer möglicherweise sehr schweren Hydraulik vermieden werden, und es kann die gleiche Energiemenge bei gleicher Kraft- oder Drehmomentabgabe bei geringerem Gewicht geliefert werden.

Bei einer vorteilhaften Ausführungsform ist die Feder eine Schraubenfeder, die die Energie durch Stauchung oder Streckung speichert.

Bei einer anderen vorteilhaften Ausführungsform ist die Feder eine Spiralfeder, deren eines Ende mit einer im wesentlichen zylindrischen Gehäusewand zusammenwirkt und deren anderes Ende mit einer Mittelachse des Gehäuses verbunden ist.

Die Erfindung wird im Folgenden anhand von vorteilhaften Ausführungsformen unter Bezugnahme auf die beigefügten Zeichnungen bspw. beschrieben. Es zeigen in schematischer Darstellung:
- Fig. 1: die Anordnung einer ersten Ausführungsform der Erfindung;
- Fig. 2: die Anordnung einer zweiten Ausführungsform der Erfindung;
- Fig. 3: die Anordnung einer dritten Ausführungsform der Erfindung;
- Fig. 4: eine vierte Ausführungsform der Erfindung;
- Fig. 5: eine fünfte Ausführungsform der Erfindung;
- Fig. 6: einen Spiralfederspeicher, der bei der Ausführungsform der Figur 5 verwendet werden kann; und
- Fig. 7: eine sechste Ausführungsform der Erfindung.

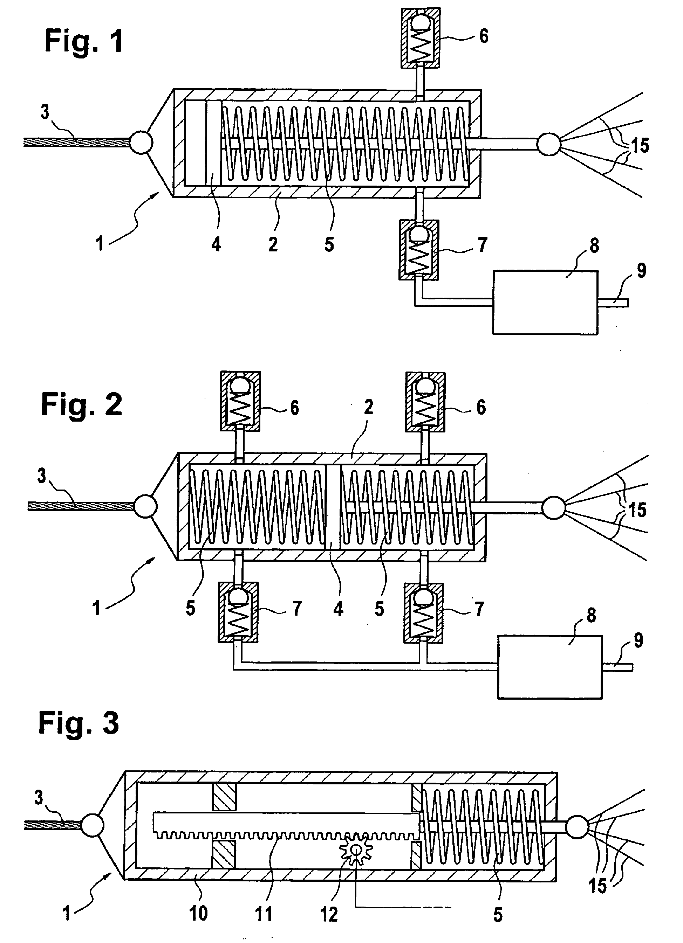

In Fig. 1 ist eine Energieerzeugungseinrichtung in Form einer Kolbenzylindereinheit 1 gezeigt. Der Zylinder 2 ist dabei mit dem Zugseil 3 verbunden, während der Kolben 4 über Leinen 15 mit dem drachenartigen Element bzw. dessen Steuergondel verbunden ist. Der Kolben 4 wird durch eine Druckfeder 5 nach links gedrückt. Der Zylinder 2 ist über ein erstes Rückschlagventil 6 mit der Atmosphäre und über ein zweites Rückschlagventil 7 mit einem Druckgasspeicher 8 verbunden. Erhöhte sich bei der gezeigten Stellung des Kolbens 4 die Zugkraft, so wird der Kolben 4 gegen die Federkraft 5 nach rechts gezogen und drückt das im Zylinder 2 befindliche Gas über das Rückschlagventil 7 in den Druckspeicher 8. Lässt der Druck nach, wird der Kolben 4 durch die Druckfeder 5 wieder nach links verschoben, der Druck im Zylinder lässt nach, und bei genügend weiter Auslenkung nach links wird neue Luft durch das Rückschlagventil 6 angesogen. Die Druckluft 8 wird dann durch eine Leitung 9 zu den Steuerelementen oder möglicherweise einem Generator zur Erzeugung elektrischer Energie geführt.

Bei der Ausführungsform der Fig. 2 weist die Kolbenzylindereinheit 1 zwei Druckfedern 5 auf. Der Kolben 4 befindet sich dabei bei einer mittleren Druckkraft in der Mitte des Zylinders 2, wie dies in Fig. 2 dargestellt ist. Auf beiden Seiten des Kolbens 4 sind dabei Rückschlagventile 6 zum Ansaugen von Luft und Rückschlagventile 7 zum Drücken von Luft in den Druckspeicher 8 vorgesehen. Wächst die Druckkraft an, so wird in Fig. 2 links gezeigten Zylindervolumen Luft angesaugt und im rechts gezeigten Volumen Luft komprimiert und in den Druckspeicher 8 geleitet. Lässt die Zugkraft nach, wird im rechten Zylindervolumen Luft angesaugt und im linken Zylindervolumen Luft komprimiert und in den Druckspeicher 8 geleitet.

Bei der Ausführungsform der Fig. 3 ist in einem Gehäuse 10 eine durch eine Druckfeder 5 belastete Zahnstange 11 gleitend gelagert, die über ein Ritzel 12 einen nicht gezeigten elektrischen Generator antreibt. Steigt die Zugkraft an, so bewegt sich die Zahnstange 11 nach rechts, versetzt das Ritzel 12 in Drehung, so dass Strom erzeugt wird. Lässt die Zugkraft nach, so bewegt sich aufgrund der Federkraft 5 die Zahnstange 11 in der entgegengesetzten Richtung, versetzt das Ritzel 12 in Drehung, so dass ebenfalls Elektrizität erzeugt wird.

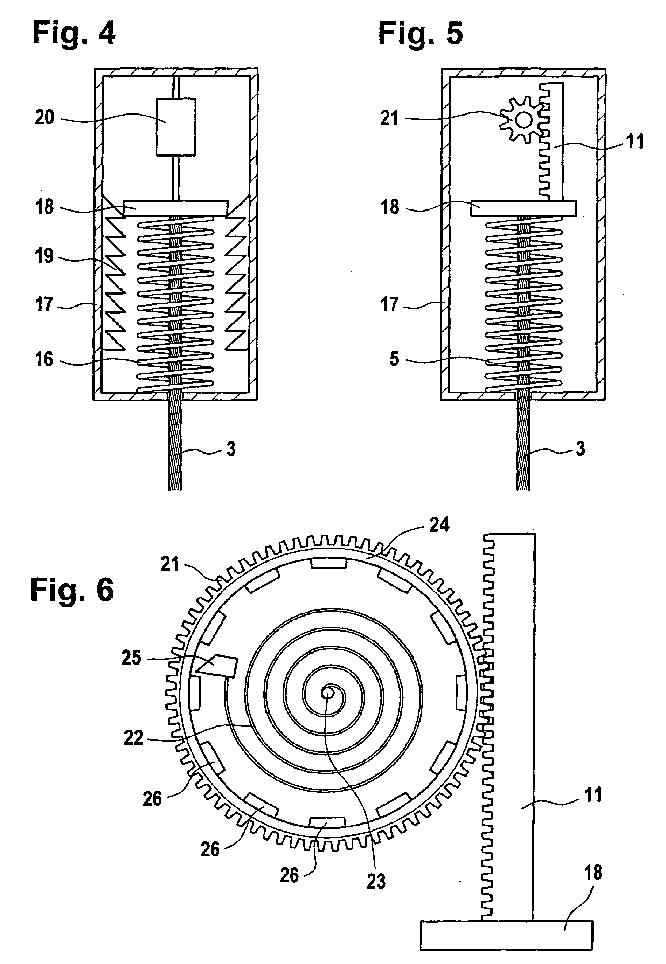

Die Figuren 4, 5 und 6 zeigen die Energiespeicherung durch Federn. Diese Energiespeicherung kann alternativ oder zusätzlich zu den oben erwähnten Ausführungsformen der Energieerzeugungseinrichtung verwendet werden.

Prinzipiell könnten als Energiespeicher in Form von Federn eine Blattfeder, eine Schraubenfeder und eine Spiralfeder verwendet werden. Die Blattfeder, die Energie durch Biegung aufnimmt und freigibt, ist eine Möglichkeit, die hier nicht näher beschrieben werden soll. Figur 4 zeigt die Anwendung einer Schraubenfeder, die Energie durch Stauchung aufnimmt und freigibt. Die Energie könnte allerdings auch durch Streckung der Feder gespeichert werden. Die die Energie speichernde Schraubenfeder 16 ist in einem Gehäuse 17 angeordnet, das mit der Gondel des drachenartigen Elements verbunden ist oder Teil ist dieser Gondel, mit der die Steuerung des drachenartigen Elements bewirkt wird. Durch das Zugseil 3 wird die Feder 16 gespannt. Ist dabei die Kraft, die durch das Zugseil 3 ausgeübt wird, größer als die bereits vorhandene Spannung der Feder, so wird die Federendplatte 18 in Figur 4 nach unten gezogen und rastet dabei in Rastvorsprüngen 19 ein. Jedes Mal, wenn die Zugkraft durch das Zugseil 3 größer ist als die Spannung der Feder, wird die Endplatte 18 weiter nach unten gezogen und mehr Energie gespeichert. Soll Energie gewonnen werden, so wird die Verrastung der Endplatte 18 aufgehoben, die Platte 18 wird durch die Federkraft nach oben bewegt und betätigt damit eine Energieerzeugungseinrichtung 20. Diese Energieerzeugungseinrichtung könnte z. B. ein Hydraulikzylinder sein, oder es könnte (über eine geeignete Umlenkeinrichtung) ein Seil gespannt werden, mit dem Klappen oder dergleichen betätigt werden.

Der Energiespeicher der Figur 4 weist im Regelfall eine konstante Federkennlinie auf. Dies kann von Nachteil sein, wenn das drachenartige Element unter sehr verschiedenen Windbedingungen geflogen wird, die zur Energiegewinnung nutzbare Zugkraft in ihrer Stärke also schwankt. Um hier eine optimale Energiegewinnung zu gewährleisten, besteht eine vorteilhafte Variante darin, wenn die Feder nicht direkt vom Zugseil gespannt wird, sondern von einem Getriebe, das die Anpassung der Federkonstante an die Zugkraft des Drachens erlaubt. Noch einfacher ist es, wenn zum Spannen der Feder ein Hebel verwendet wird, auf dem der Angriffspunkt der Zugkraft verschoben werden kann. Durch Wahl der Angriffspunkt-Position auf den Hebel kann die Feder immer optimal gespannt werden.

Bei der Ausführungsform der Figur 5 wird die wechselnde Zugkraft zunächst in eine Drehbewegung umgewandelt. Dies kann geschehen, indem ein elastisches Element 5 (vorzugsweise eine pneumatische Feder mit einstellbarer Federkonstante) zwischen Zugseil und drachenartigem Element gespannt wird. Die Feder 5 ist dabei wieder in einem Gehäuse 17 angeordnet. Die Kraft des Zugseils 3 wirkt auf eine Endplatte 18, an der eine Zahnstange 11 angeordnet ist. Diese Zahnstange wirkt auf ein Zahnrad 21 eines Energiespeichers 22 mit einer Spiralfeder, der in Figur 6 näher dargestellt ist. Tritt eine entsprechend große Zugkraft am Zugseil 3 auf, so wird die Platte 18 mit der Zahnstange 11 nach unten gezogen und "zieht damit den Spiralfederspeicher auf". Lässt die Zugkraft nach, so wird die Platte 18 durch die Feder 5 wieder nach oben bewegt, wobei sich der Energiespeicherinhalt des Spiralspeichers aufgrund eines Freilaufs nicht ändert.

Der Energiespeicher der Figur 5 ist in Figur 6 deutlicher gezeigt. Die Spiralfeder 22 ist mit ihrem einen Ende mit einer Mittelachse 23 des Gehäuses 24 verbunden, in dem sich die Spiralfeder 22 befindet. Wird die Zahnstange 11 nach unten bewegt, so wird das Gehäuse 24 im Uhrzeigersinn gedreht. Eine Klinke 25 wird dabei durch Rasten 26 mitgenommen und im Uhrzeigersinn bewegt, wodurch die Feder gespannt wird. Die Klinke 25 wird dabei durch nicht gezeigte Rastmittel daran gehindert, sich im Gegenuhrzeiger zu bewegen, selbst wenn die Spannung durch die Rasten 26 nicht mehr vorhanden ist. Dies ist in dem Moment der Fall, wo die Zahnstange 11 nach oben bewegt wird und das Gehäuse 24 im Gegenuhrzeigersinn gedreht wird. Die Klinke 25 kann dabei über die Rastvorsprünge 26 gleiten. Es wird die ursprüngliche Stellung des Gehäuses 24 wiederhergestellt, so dass erneut eine zusätzliche Spannung auf die Spiralfeder 22 ausgeübt werden kann, sobald die Zugkraft groß genug ist. Das Drehmoment der gespannten Feder 22 wirkt dabei dauernd auf die Mittelachse 23, so dass hier laufend Energie abgenommen werden kann, während gleichzeitig außen durch die Zahnstange 11 neue Energie zugeführt werden kann.

Es wäre auch denkbar, die Drehbewegung des Gehäuses 24, mit der die Feder gespannt wird, zur Energiegewinnung zu verwenden. Dabei müsste dann die Blockierung der Klinke 25 gelöst werden, so dass sich die Feder entspannen und von der Achse Energie abgenommen werden kann. Der Nachteil dieser Lösung ist aber, dass während der Entnahme von Energie keine neue Energie zugeführt werden kann. Dieser Nachteil wird bei der erfindungsgemäßen Ausführungsform vermieden, bei der die Energie durch die Mittelachse 23 abgenommen wird. Wird diese Anordnung gewählt, so gibt es mehrere Betriebszustände:
i. Entspannt und in Ruhe: die Spiralfeder 22 ist entspannt, das Gesamtsystem ruht.
ii. Die Feder 22 wird gespannt: die Spiralfeder 22 wird aufgewunden und speichert Energie.
iii. Die Feder wird entspannt: die Spiralfeder 22 entspannt sich und dreht sich dabei in ihrem Gehäuse 24, die Einheit zur Energiegewinnung dreht sich mit der Achse 23 frei mit.
iv. Die Feder wird gespannt und entspannt: die Spiralfeder 22 wird auf der einen Seite (bei 25) aufgewunden, während sie gleichzeitig entspannt wird (bei 23).

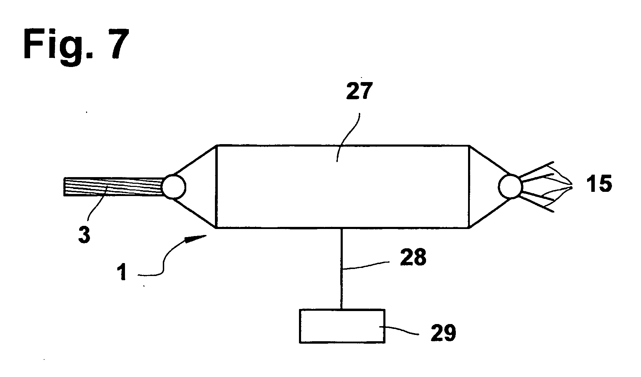

In Fig. 7 ist eine Energieerzeugungseinheit in Form eines Piezo-Elements 27 gezeigt. Bei einer Änderung der auf das Piezo-Element 27 wirkenden mechanischen Spannung wird elektrische Energie erzeugt. Über eine Leitung 28 wird die elektrische Energie in einen Speicher 29 geleitet und dort gespeichert.

## Patentansprüche

1. Wasserfahrzeug mit einem drachenartigen Element, das mit einem Zugseil (3) mit dem Wasserfahrzeug verbunden ist, wobei das drachenartige Element mit Verstelleinrichtungen und einer Energieerzeugungseinrichtung (1) versehen ist, **dadurch gekennzeichnet, daß** die Energieerzeugungseinrichtung bei Veränderung der auf das Zugseil (3) ausgeübten Zugkraft Energie abgibt.

2. Wasserfahrzeug nach Anspruch 1, **dadurch gekennzeichnet, dass** die Energieerzeugungseinrichtung (1) eine Kolbenzylindereinheit (2, 4) mit einem federbelasteten Kolben (4) aufweist, wobei der Zylinder (2) mit dem Zugseil (3) und der Kolben (4) mit dem drachenartigen Element oder der Zylinder (2) mit dem drachenartigen Element und der Kolben (4) mit dem Zugseil (3) verbunden ist und der Zylinder (2) über ein Rückschlagventil (7) mit einem Druckfluidspeicher (8) verbunden ist.

3. Wasserfahrzeug nach Anspruch 2, **dadurch gekennzeichnet, dass** beide durch den Kolben (4) getrennte Zylindervolumina über je ein Rückschlagventil (7) mit dem Druckfluidspeicher (8) verbunden sind.

4. Wasserfahrzeug nach Anspruch 1, **dadurch gekennzeichnet, dass** die Energieerzeugungseinrichtung ein sackartiges Gebilde mit einer luftdichten Hülle aufweist, das an einem Ende mit dem Zugseil (3) und am anderen Ende mit dem drachenartigen Element verbunden ist, durch elastische Spreizelemente aufgeweitet wird, bei Auftreten einer Zugkraft unter Volumenverringerung auseinander gezogen wird und über ein Rückschlagventil (7) mit einem Druckfluidspeicher (8) verbunden ist.

5. Wasserfahrzeug nach Anspruch 1, **dadurch gekennzeichnet, dass** die Energieerzeugungseinrichtung einen Lineargenerator mit einem federbelasteten Läufer aufweist, wobei der Ständer mit dem Zugseil (3) und der Läufer mit dem drachenartigen Element oder der Ständer mit dem drachenartigen Element und der Läufer mit dem Zugseil (3) verbunden ist.

6. Wasserfahrzeug nach Anspruch 1, **dadurch gekennzeichnet, dass** die Energieerzeugungseinrichtung eine in einem Bauelement (10) verschiebbar angeordnete federbelastete Zahnstange (11) aufweist, die über ein am Bauelement (10) gelagertes Ritzel (12) einen Generator antreibt, und das Bauelement (10) mit dem Zugseil (3) und die Zahnstange (11) mit dem drachenartigen Element oder das Bauelement (10) mit dem drachenartigen Element und die Zahnstange (11) mit dem Zugseil (3) verbunden ist.

7. Wasserfahrzeug nach Anspruch 1, **dadurch gekennzeichnet, dass** die Energieerzeugungseinrichtung ein Piezo-Element (27) aufweist

8. Wasserfahrzeug nach einem der Ansprüche 2 bis 4, **dadurch gekennzeichnet, dass** der Druckfluidspeicher (8) mit einem Generator zum Erzeugen von elektrischer Energie verbunden ist.

9. Wasserfahrzeug nach einem der Ansprüche 2, 3, 4 und 7, **dadurch gekennzeichnet, dass** als Fluid Luft verwendet wird.

10. Wasserfahrzeug nach einem der Ansprüche 1 bis 9, **dadurch gekennzeichnet, dass** mehrere parallel oder hintereinander angeordnete Energieerzeugungseinrichtungen (1) vorgesehen sind.

11. Wasserfahrzeug nach einem der Ansprüche 2, 3 und 5 bis 9, **dadurch gekennzeichnet, dass** mehrere Federelemente (5) für die Federbelastung vorgesehen sind.

12. Wasserfahrzeug nach einem der Ansprüche 2 bis 6 und 8 bis 10, **dadurch gekennzeichnete, dass** die Federkraft einstellbar ist.

13. Wasserfahrzeug nach einem der Ansprüche 2,3 und 5 bis 11, **dadurch gekennzeichnet, dass** die Feder eine Pressluftfeder ist.

14. Wasserfahrzeug nach einem der Ansprüche 2, 3, 4, und 7 bis 9, **dadurch gekennzeichnet, dass** statt der Feder oder zusätzlich zur Feder ein Teil des im Druckfluidspeicher (8) vorhandenen Fluids zum Zurückstellen der Energieerzeugungseinrichtung (1) verwendet wird.

15. Wasserfahrzeug nach einem der Ansprüche 2, 3 und 8, **dadurch gekennzeichnet, dass** das Fluid Hydraulikflüssigkeit, insbesondere Hydrauliköl ist.

16. Wasserfahrzeug nach Anspruch 15, **dadurch gekennzeichnet, dass** der Druckfluidspeicher für die Hydraulikflüssigkeit ein Luftpolster aufweist.

17. Wasserfahrzeug nach Anspruch 16, **dadurch gekennzeichnet, dass** die Entnahme der Hydraulikflüssigkeit aus dem Druckfluidspeicher mit Hilfe eines flexiblen Schlauches erfolgt, dessen Ende mit einem Gewicht beschwert ist.

18. Wasserfahrzeug nach Anspruch 16, **dadurch gekennzeichnet, dass** Hydraulikflüssigkeit und Luftpolster durch eine Membran voneinander getrennt sind.

19. Wasserfahrzeug nach einem der Ansprüche 1 bis 18**, dadurch gekennzeichnet, dass** am Wasserfahrzeug eine Winsch vorgesehen ist, mit der die Zugkraft des Zugseils (3) durch Dichtholen oder Fieren desselben veränderbar ist.

20. Wasserfahrzeug nach einem der Ansprüche 1 bis 19, **dadurch gekennzeichnet, dass** die Spannung des Zugseils (3) mit einem Hydraulikstempel veränderbar ist.

21. Wasserfahrzeug nach einem der Ansprüche 1 bis 20, **dadurch gekennzeichnet, dass** die Winsch hin- und herfahrbar, insbesondere auf einem Schlitten angeordnet ist.

22. Wasserfahrzeug nach einem der Ansprüche 5 bis 8, **dadurch gekennzeichnet, dass** das drachenartige Element einen Akku zum Speichern elektrischer Energie aufweist.

23. Wasserfahrzeug nach einem der Ansprüche 1 bis 22, **dadurch gekennzeichnet, dass** die Energieerzeugungseinrichtung (1) eine Feder (16, 22) aufweist, die zum Speichern der Energie ausgebildet ist.

24. Wasserfahrzeug nach Anspruch 23, **dadurch gekennzeichnet, dass** die Feder eine Schraubenfeder (16) ist, die die Energie durch Stauchung oder Streckung speichert.

25. Wasserfahrzeug nach Anspruch 23, **dadurch gekennzeichnet, dass** die Feder eine Spiralfeder (22) ist, deren eines Ende mit einer im wesentlichen zylindrischen Gehäusewand (24) zusammenwirkt und deren anderes Ende mit einer Mittelachse (23) des Gehäuses (24) verbunden ist.

## Claims

1. Watercraft having a kite-like element, which is connected to the watercraft by a hawser (3), the kite-like element being provided with adjusting devices and with a power generating device (1), **characterized in that** the power generating device emits power when there is a change in the tensile force exerted on the hawser (3).

2. Watercraft according to Claim 1, **characterized in that** the power generating device (1) has a piston/cylinder unit (2, 4) with a spring-loaded piston (4), with the cylinder (2) being connected to the hawser (3) and with the piston (4) being connected to the kite-like element, or with the cylinder (2) being connected to the kite-like element and the piston (4) being connected to the hawser (3), and with the cylinder (2) being connected to a pressurized-fluid reservoir (8) via a non-return valve (7).

3. Watercraft according to Claim 2, **characterized in that** the two cylinder volumes which are separated by the piston (4) are connected, in each case via a non-return valve (7) to the pressurized-fluid reservoir (8).

4. Watercraft according to Claim 1, **characterized in that** the power generating device has a structure like a sack with an airtight envelope, which is connected at one end to the hawser (3) and at the other end to the kite-like element, is widened by elastic spreading elements, is expanded when a tensile force occurs, reducing the volume, and is connected via a non-return valve (7) to the pressurized-fluid reservoir (8).

5. Watercraft according to Claim 1, **characterized in that** the power generating device has a linear generator with a spring-loaded runner, with the stator being connected to the hawser (3) and the runner being connected to the kite-like element, or with the stator being connected to the kite-like element and the runner being connected to the hawser (3).

6. Watercraft according to Claim 1, **characterized in that** the power generating device has a spring-loaded toothed rod (11) which is arranged such that it can move in a component (10) and drives a generator via a pinion (12) which is mounted on the component (10), and the component (10) is connected to the hawser (3) and the toothed rod (11) is connected to the kite-like element, or the component (10) is connected to the kite-like element and the toothed rod (11) is connected to the hawser (3).

7. Watercraft according to Claim 1, **characterized in that** the power generating device has a piezo-element (27).

8. Watercraft according to one of Claims 2 to 4, **characterized in that** the pressurized-fluid reservoir (8) is connected to a generator in order to generate electrical power.

9. Watercraft according to one of Claims 2, 3, 4 and 7, **characterized in that** air is used as the fluid.

10. Watercraft according to one of Claims 1 to 9, **characterized in that** a plurality of power generating devices (1) are provided, and are arranged in parallel or in series.

11. Watercraft according to one of Claims 2, 3 and 5 to 9, **characterized in that** a plurality of spring elements (5) are provided for spring loading.

12. Watercraft according to one of Claims 2 to 6 and 8 to 10, **characterized in that** the spring force is adjustable.

13. Watercraft according to one of Claims 2, 3 and 5 to 11, **characterized in that** the spring is a compressed-air spring.

14. Watercraft according to one of Claims 2, 3, 4 and 7 to 9, **characterized in that**, instead of the spring or in addition to the spring, a portion of the fluid in the pressurized-fluid reservoir (8) is used to reset the power generating device (1).

15. Watercraft according to one of Claims 2, 3 and 8, **characterized in that** the fluid is hydraulic fluid, in particular hydraulic oil.

16. Watercraft according to Claim 15**, characterized in that** the pressurized-fluid reservoir has an air cushion for the hydraulic fluid.

17. Watercraft according to Claim 16, **characterized in that** the hydraulic fluid is taken from the pressurized-fluid reservoir with the aid of a flexible hose, whose end is made heavier by a weight.

18. Watercraft according to Claim 16, **characterized in that** the hydraulic fluid and the air cushion are separated from one another by a membrane.

19. Watercraft according to one of Claims 1 to 18, **characterized in that** a winch is provided on the watercraft and can be used to vary the tensile force on the hawser (3) by hauling in or paying out the hawser (3).

20. Watercraft according to one of Claims 1 to 19, **characterized in that** the tension on the hawser (3) can be varied by a hydraulic stamp.

21. Watercraft according to one of Claims 1 to 20, **characterized in that** the winch can be moved to and fro, and in particular is arranged on a carriage.

22. Watercraft according to one of Claims 5 to 8, **characterized in that** the kite-like element has a rechargeable battery for storage of electrical energy.

23. Watercraft according to one of Claims 1 to 22, **characterized in that** the power generating device (1) has a spring (16, 22) which is designed to store energy.

24. Watercraft according to Claim 23, **characterized in that** the spring is a helical spring (16), which stores energy by compression or stretching.

25. Watercraft according to Claim 23, **characterized in that** the spring is a spiral spring (22), one of whose ends interacts with an essentially cylindrical housing wall (24) and whose other end is connected to a center shaft (23) of the housing (24).

## Revendications

1. Bateau comportant un élément de type cerf-volant, qui est relié au bateau par un câble de traction (3), ledit élément de type cerf-volant étant muni de dispositifs de réglage et d'un dispositif de production d'énergie (1), **caractérisé en ce que** le dispositif de production d'énergie délivre de l'énergie en cas de variation de la force de traction exercée sur le câble de traction (3) .

2. Bateau selon la revendication 1, **caractérisé en ce que** le dispositif de production d'énergie (1) comporte une unité à cylindre et piston (2, 4) avec un piston (4) sollicité par ressort, le cylindre (2) étant relié au câble de traction (3) et le piston (4) étant relié à l'élément de type cerf-volant, ou le cylindre (2) étant relié à l'élément de type cerf-volant et le piston (4) étant relié au câble de traction (3), et le cylindre (2) est relié à un réservoir de fluide sous pression (8) via un clapet anti-retour (7).

3. Bateau selon la revendication 2, **caractérisé en ce que** les deux volumes du cylindre, séparés par le piston (4), sont reliés au réservoir de fluide sous pression (8) chacun par l'intermédiaire d'un clapet anti-retour (7).

4. Bateau selon la revendication 1, **caractérisé en ce que** le dispositif de production d'énergie comporte une structure en forme de poche avec une enveloppe étanche à l'air, qui est reliée par une extrémité au câble de traction (3) et par l'autre extrémité à l'élément de type cerf-volant, est élargie par des éléments d'écartement élastiques, est étirée en cas d'apparition d'une force de traction sous l'effet d'une diminution du volume et est reliée à un réservoir de fluide sous pression (8) par l'intermédiaire d'un clapet anti-retour (7).

5. Bateau selon la revendication 1, **caractérisé en ce que** le dispositif de production d'énergie comporte un générateur linéaire avec un rotor sollicité par ressort, le support étant relié au câble de traction (3) et le rotor étant relié à l'élément de type cerf-volant, ou le support étant relié à l'élément de type cerf-volant et le rotor étant relié au câble de traction (3).

6. Bateau selon la revendication 1, **caractérisé en ce que** le dispositif de production d'énergie comporte une crémaillère (11) sollicitée par ressort, laquelle est montée mobile dans un élément (10) et actionne un générateur par l'intermédiaire d'un pignon (12) monté sur l'élément (10), et l'élément (10) est relié au câble de traction (3) et la crémaillère (11) est reliée à l'élément de type cerf-volant, ou l'élément (10) est relié à l'élément de type cerf-volant et la crémaillère (11) est reliée au câble de traction (3).

7. Bateau selon la revendication 1, **caractérisé en ce que** le dispositif de production d'énergie comporte un élément piézoélectrique (27).

8. Bateau selon l'une quelconque des revendications 2 à 4, **caractérisé en ce que** le réservoir de fluide sous pression (8) est relié à un générateur destiné à générer l'énergie électrique.

9. Bateau selon l'une quelconque des revendications 2, 3, 4 et 7, **caractérisé en ce que** le fluide utilisé est l'air.

10. Bateau selon l'une quelconque des revendications 1 à 9, **caractérisé en ce qu'**il est prévu plusieurs dispositifs de production d'énergie (1) disposés parallèlement ou les uns derrière les autres.

11. Bateau selon l'une quelconque des revendications 2, 3 et 5 à 9, **caractérisé en ce que** plusieurs éléments de ressort (5) sont prévus pour la sollicitation par ressort.

12. Bateau selon l'une quelconque des revendications 2 à 6 et 8 à 10, **caractérisé en ce que** la force de ressort est réglable.

13. Bateau selon l'une quelconque des revendications 2, 3 et 5 à 11, **caractérisé en ce que** le ressort est un ressort à air comprimé.

14. Bateau selon l'une quelconque des revendications 2, 3, 4 et 7 à 9, **caractérisé en ce qu'**une partie du fluide contenu dans le réservoir de fluide sous pression (8) est utilisée en lieu et place du ressort ou en plus du ressort pour ramener le dispositif de production d'énergie (1) en position initiale.

15. Bateau selon l'une quelconque des revendications 2, 3 et 8, **caractérisé en ce que** le fluide est un liquide hydraulique, en particulier de l'huile hydraulique.

16. Bateau selon la revendication 15, **caractérisé en ce que** le réservoir de fluide sous pression comporte un matelas d'air pour le liquide hydraulique.

17. Bateau selon la revendication 16, **caractérisé en ce que** le liquide hydraulique est prélevé hors du réservoir de fluide sous pression au moyen d'un tuyau flexible dont l'extrémité est alourdie par un poids.

18. Bateau selon la revendication 16, **caractérisé en ce que** le liquide hydraulique et le matelas d'air sont séparés l'un de l'autre par une membrane.

19. Bateau selon l'une quelconque des revendications 1 à 18, **caractérisé en ce que** sur le bateau est prévu un treuil, qui permet de faire varier la force de traction du câble de traction (3) en halant ou choquant celui-ci.

20. Bateau selon l'une quelconque des revendications 1 à 19, **caractérisé en ce que** la tension du câble de traction (3) peut être modifiée au moyen d'un piston hydraulique.

21. Bateau selon l'une quelconque des revendications 1 à 20, **caractérisé en ce que** le treuil est monté de manière mobile en va-et-vient, en particulier sur un chariot.

22. Bateau selon l'une quelconque des revendications 5 à 8, **caractérisé en ce que** l'élément de type cerf-volant comporte un accumulateur pour stocker l'énergie électrique.

23. Bateau selon l'une quelconque des revendications 1 à 22, **caractérisé en ce que** le dispositif de production d'énergie (1) comporte un ressort (16, 22), qui est réalisé pour le stockage de l'énergie.

24. Bateau selon la revendication 23, **caractérisé en ce que** le ressort est un ressort cylindrique (16) qui stocke l'énergie par compression ou allongement.

25. Bateau selon la revendication 23, **caractérisé en ce que** le ressort est un ressort hélicoïdal (22), dont une extrémité coopère avec une paroi de carter (24) sensiblement cylindrique et dont l'autre extrémité est relié à un axe central (23) du carter (24).
